(19) Europäisches Patentamt
European Patent Office
Office européen des brevets

(11) Publication number: **0 178 923**
**B1**

(12) # EUROPEAN PATENT SPECIFICATION

(45) Date of publication of patent specification: **07.03.90**

(51) Int. Cl.$^5$: **H 04 N 9/64**

(21) Application number: **85307460.7**

(22) Date of filing: **16.10.85**

(54) **Television receivers.**

(30) Priority: **17.10.84 JP 218079/84**

(43) Date of publication of application:
**23.04.86 Bulletin 86/17**

(45) Publication of the grant of the patent:
**07.03.90 Bulletin 90/10**

(84) Designated Contracting States:
**DE FR GB NL**

(56) References cited:
**EP-A-0 051 075**
**EP-A-0 087 485**

**ELECTRICAL DESIGN NEWS, no. 17, July 1985, pages 195-203, Boston, Massachusetts, US; "Computerized TVs use digital control and DSP techniques"**

(73) Proprietor: **SONY CORPORATION**
**7-35 Kitashinagawa 6-Chome Shinagawa-ku**
**Tokyo 141 (JP)**

(72) Inventor: **Itabashi, Takao c/o Sony Corporation**
**Patents Division 6-7-35 Kitashinagawa**
**Shinagawa-ku Tokyo 141 (JP)**
Inventor: **Saito, Junya c/o Sony Corporation**
**Patents Division 6-7-35 Kitashinagawa**
**Shinagawa-ku Tokyo 141 (JP)**
Inventor: **Ichikawa, Norihito Sony Corporation**
**Patents Division 6-7-35 Kitashinagawa**
**Shinagawa-ku Tokyo 141 (JP)**
Inventor: **Komiya, Yoshinori Sony Corporation**
**Patents Division 6-7-35 Kitashinagawa**
**Shinagawa-ku Tokyo 141 (JP)**

(74) Representative: **Cotter, Ivan John et al**
**D. YOUNG & CO. 10 Staple Inn**
**London WC1V 7RD (GB)**

**EP 0 178 923 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to apparatus and methods for use with a television receiver.

Television receivers are known in which a portion or all of the relevant signal processing, following receipt of an analog television signal, is performed by digital circuitry. Typically, the signal is received and converted into a digital signal, which is processed in digital form, and then reconverted to an analog signal for display on a colour cathode ray tube. Unlike conventional analog signal processing, which employs various discrete components having fixed values, digital signal processing involves the retention in memories, registers, and latches of purely numerical values that correspond to desired settings of various video parameters, such as brightness, hue, vertical and horizontal sync, linearity, and the like.

The retention of such digital data is not a difficult task in a normal digital process or such as might be found in a computer or the like. However, it does pose a problem in equipment such as a television receiver because the receiver has associated with it not only the digital signal elements but also high voltages and pulses. Thus, the problem arises that the high voltages present in the television receiver can produce noise and transients in the overall circuit, which can affect adversely the various digital values retained at the several memory and register locations in the digital television receiver. In other words, it is possible that the data retained in the various latches, registers, and memories unintentionally can be rewritten with totally spurious data. When this happens, the receiver circuitry being controlled by these erroneous digital values might be harmed or destroyed.

According to one aspect of the invention there is provided apparatus for use with a television receiver in which a television signal is processed in digital form, the apparatus comprising: processing control means for controlling the digital processing of the television signal; memory means connected to the processing control means for storing data used thereby in controlling the processing; refreshing means connected to the memory means for refreshing data stored therein; keyboard means operably connected to the receiver and capable of being actuated by a user of the television receiver for inputting data to control operation of the television receiver; and write control means connected to the keyboard means and the memory means for controlling the memory means for writing input data into the memory means upon actuation of the keyboard means; characterised in that the refreshing means is responsive to a vertical blanking pulse signal generated within the apparatus from the television signal to refresh said data stored in the memory means at regular periodic intervals which correspond to the vertical synchronising period of the television signal.

According to a second aspect of the invention there is provided a method for use with a television receiver for digitally processing a television signal that is converted into a digital signal and controlled by digital data stored in a memory and having a keyboard for inputting new data upon actuation by the user of the television receiver, the method being characterised by the steps of: generating a vertical blanking pulse signal from the television signal; in response to said vertical blanking pulse signal, cyclically refreshing the data stored in the memory at regular periodic intervals which correspond to the vertical synchronising period of the television signal; and writing new data inputted by the user into the memory at any time during a refreshing cycle upon inputting new data by the user.

According to a third aspect of the invention there is provided apparatus for use with a television receiver in which a television signal is digitally processed, the apparatus comprising: processing control means for controlling digital processing of the television signal in accordance with digital data inputted thereto; register means connected to the processing control means for temporarily storing said digital data used by the processing control means for controlling processing of said television signal; refreshing means connected to the register means for refreshing digital data stored therein from a memory means; keyboard means operably connected to the receiver and capable of being actuated manually by a user of the television receiver for inputting data to control operation of the television receiver; and write control means for controlling the memory means for writing input data into the memory means upon actuation of the keyboard means; characterised in that the refreshing means is responsive to a vertical blanking pulse signal generated within the apparatus from the television signal to refresh said data stored in the register means at regular periodic intervals which correspond to the vertical synchronising period of the television signal.

A preferred embodiment of the invention described below provides apparatus wherein a television signal is processed in digital form, which includes a memory to store data used to control the digital processing of the television signal, a circuit to refresh data in the memory at periodic intervals, and a system operable in connection with the memory and data refreshing circuitry to accommodate the writing into the memory of new input data at any time such data is inputted by the user.

The preferred embodiment provides a method for cooperating with a known digital signal processing method in the television receiver, the method providing a routine for refreshing data retained at various locations within the digital television receiver at regular periodic intervals and providing steps to accommodate the writing in of new data to the appropriate memory at any time that such new data is selected by the user during the continuing refreshing or updating process.

The preferred embodiment provides a method and apparatus for use with a digital television receiver that can eliminate or at least reduce the above-noted defects inherent in the previous proposal. Specifically, the method and apparatus can prevent (or at least reduce the possibility of) data stored therein from being rewritten or altered by high-voltage pulses and noise present in the receiver. This is done by periodically refreshing the data contained in various digital data storage locations of the receiver.

The invention will now be further described by way of illustrative and non-limiting example, with reference to the accompanying drawings, in which like references represent like elements throughout, and in which:

Figure 1 is a schematic block diagram of a previously proposed digital television receiver;

Figure 2 is a schematic block diagram of a digital television receiver according to an embodiment of the present invention; and

Figure 3 is a flow chart useful in explaining operation of the digital television receiver of Figure 2 and showing an embodiment of the method provided by the present invention.

A previously proposed television receiver or television set that employs digital signal processing is shown in Figure 1. An input television signal from an aerial (antenna) or cable is provided to a tuner or tuner circuit 11 that represents generally all of the conventional tuning circuitry of a television receiver, including a synthesiser system, up to the video detecting circuit. Thus, the tuner 11 provides a composite video signal to an analog-to-digital (A/D) converter 21 and the digital signal from the converter is fed to a comb filter 31. One output of the filter 31 is fed to a highpass filter 32 which separates out a luminance signal $Y_D$ and supplies it to a luminance processing circuit 33. The luminance processing circuit 33 may be of a known form and is used to adjust the contrast and other parameters of the luminance signal. After having been so processed, the luminance signal is fed to a digital-to-analog (D/A) converter 23Y in which it is converted back into an analog luminance signal Y. The analog luminance signal Y is fed to a matrix circuit 24, which may be of conventional form, in which the luminance signal is combined with appropriate colour signals to form three signals (RGB) for colour display.

In that regard, another output from the comb filter 31 is fed to a bandpass filter 34, which produces a digital carrier chrominance signal $C_D$. The digital carrier chrominance signal $C_D$ is supplied to a chrominance processing circuit 35 to have various signal parameters adjusted therein in a known fashion. For example, automatic colour control (ACC) can be adjusted, and hue, colour (colour saturation degree) and the like are corrected in the chrominance processing circuit 35, and the processed chrominance signal $C_D$ then is fed to a colour demodulator or colour demodulating circuit 22. The colour demodulating circuit 22 operates to demodulate respective digital red and blue colour difference signals ($R_D$—$Y_D$) and ($B_D$—$Y_D$). Such digital colour difference signals then are fed to respective digital-to-analog (D/A) converters 23R and 23B in which they are converted to respective analog colour difference signals (R—Y) and (B—Y). The analog colour difference signals (R—Y) and (B—Y) are supplied to the matrix circuit 24, which operates in a conventional fashion to derive a green colour signal in combination with the analog luminance signal (Y) provided from the D/A converter 23Y. The matrix circuit 24 derives three primary colour signals red (R), green (G), and blue (B), which then are supplied, respectively, by way of white balance amplifiers 25R, 25G, 25B and drive signal amplifiers 12R, 12G, and 12B, to a colour cathode ray tube (CRT) 13.

Typically, a digital deflection circuit also is provided in the television receiver and, as shown in Figure 1, the video signal from the tuner 11 is fed to a sync separator or sync separating circuit 41 that produces at one output thereof a horizontal sync pulse signal which is fed to a horizontal pulse shaper 42. The horizontal sync pulses in this signal are shaped in the pulse shaper 42 to have a predetermined pulse width and phase and fed to a horizontal output circuit 16. The horizontal output circuit 16 produces in known manner a horizontal deflection signal that is fed to a deflection coil 15 that is arranged in known manner in association with the colour cathode ray tube 13. The sync separating circuit 41 produces also a composite sync pulse signal that is fed to an integrator or integrating circuit 43, which produces a vertical sync pulse signal. The vertical sync pulse signal is fed to a pulse shaping circuit 44, in which the pulses are formed to have a predetermined pulse width and phase. The resultant shaped-pulse sync signal then is fed to a vertical output circuit 17, which produces a known vertical deflection signal that is fed to the deflection coil 15 of the cathode ray tube 13.

It has been proposed to employ in such television receivers employing digital signal processing one or more microcomputers or microprocessors to control the various functions of the receiver. In the example shown in Figure 1, two microcomputers 50 and 60 are provided and each is connected to its own respective non-volatile memory 72 and 73. Additionally, the microcomputer 50 is connected to a key panel or keyboard 71 that contains a number of keys or buttons for use by the user. The key panel 71 is known and enables the user to select a channel to be viewed and to adjust the hue, colour, and so on of the television receiver. The memory 72, which is connected to the microcomputer 50, is used to store channel selection data for the channel that has been selected by appropriate keys on the key panel 71 and, in that regard, ten keys typically are provided for channel selection. The memory 72 operates to store the channel data, as well as data for hue, colour, and the like that has been selected by the user using the key panel 71, such that when the power switch of the receiver is turned off the data is retained so that it is available to be recalled at the time the receiver is turned on again. The information inserted from the keyboard 71 may be thought of as being offset data, representing an amount by which the particular picture parameter would be offset from a standard or reference value. All of the various parameters relating to picture quality have a centre value or standard value and the data entered in the memory 72 by operation or manipulation of the keys on the keyboard 71 represents either increases or decreases, that is, offsets, from these centre or standard values. The memory 73 is provided to contain the standard or centre values of the various picture parameters that may be adjusted or offset by means of the keyboard 71. In addition, the memory 73 is arranged also to store, for example, data relating to white balance and horizontal and vertical deflection, that is, the linearity thereof, which the user is not able to adjust but must be adjusted by the manufacturer or a service technician working on the receiver or set. The standard value data, as well as the other data described above, is entered into the memory 73 by means of an adjusting commander unit 75 that temporarily can be connected to the television set, that is to the microcomputer 60, by means of a connector represented schematically at 76.

The microcomputers 50, 60 and their associated non-volatile memories 72, 73 operate so that, when the power switch of the television receiver is turned on, the microcomputer 50 reads out from the memory 72 the channel data retained therein based upon the channel that had been selected at the time that the power switch of the receiver was turned off. Thus, the non-volatile memory 72 supplies this channel information by way of the microcomputer 50 to the tuner 11 to tune to the channel that was being viewed when the power switch of the television receiver was turned off. Additionally, at that time the microcomputer 60 then reads out from the memory 73 the white balance data and supplies such data by way of an interface unit 29 to colour amplifiers 25R, 25G, 25B, whereby the three primary colour signals red (R), green (G), and blue (B) are corrected in order to establish the appropriate white balance. The interface unit 29 is employed as a buffer to make certain that the logic levels of all of the signals are appropriate between the various units, and includes registers or latches that latch up when data is provided thereto.

Additionally, the microcomputer 60 reads out from the non-volatile memory 73 the horizontal and vertical deflection data retained therein and supplies such data through an interface unit 49 to the respective pulse shaping circuit, 42 or 44, whereby the horizontal and vertical deflection waveforms are corrected as appropriate. The microcomputer 60 also reads out standard value data relating to hue, colour, and the like from the memory 73 and, when the microprocessor 50 reads the data relative to the offset values of the hue, colour, and the like from the memory 72, this data is fed to the microcomputer 60 through the microcomputer 50 by way of an interface unit 74 and is combined with the standard or reference value data. Thus, the offset data produced by the memory 72 is added in the microcomputer 60 to the data relative to the standard values derived from the memory 73 and the resultant summed data then is supplied through an interface unit 39 to the luminance processing circuit 33 and chrominance processing circuit 35, as appropriate, in which the signals $Y_D$ and $C_D$ are adjusted according to the values determined by the user manipulating the keyboard 71.

Accordingly, it will be seen from the foregoing that it is possible to turn the digital television receiver off and on again and to view the channel that was set at the time the set was turned off and also to have the picture adjusted with the previous settings. The data read out from the memories and fed to the various interface units 29, 39, and 49 is latched therein in registers (not shown), which are provided in each of the interface units, so that the data remains set until new data is entered by use of the keyboard 71.

In regard to retaining the offset values and the selected channel information, at the time the user operates the keyboard 71 to select the channel the microcomputer 50 reads out from the memory 72 the preset data that corresponds to the channel selected by the keyboard 71 and such data then is fed to the tuner 11 to select the designated channel. At the same time, the data indicating the newly selected channel is written back into the memory 72 to be ready for the situation when the power switch of the receiver is turned off while the receiver is set to the selected channel. Similarly, in regard to the picture quality, such as hue and the like, when the appropriate key on the keyboard 71 is operated the data in the memory 72 corresponding to the selected offset value of the hue, for example, is updated and supplied by way of the microcomputer 50 through the interface unit 74 to the microcomputer 60, in which it is added to the standard value data as derived from the non-volatile memory 73. Then, the standard data with the offset value summed therewith is supplied through the interface unit 39 to the chrominance processing unit 35, which carries out the appropriate hue adjustment. Similarly, at that time this offset information also is stored in the non-volatile memory 72 so that, in the event the receiver is turned off and turned on once again, the hue selection as previously determined will once again be used to offset the standard value.

It should be noted that units 20, 30, and 40 shown in Figure 1 as contained within single-dot chain lines and the microcomputers 50, 60 and memories 72, 73 typically are formed as individual integrated circuit units and, for example, a commercially available television receiver might employ intergated circuits manufactured by International Telephone and Telegraph Corporation (ITT), such as those identified by the following part numbers:

IC20—VCU2100
IC30—CVPU2210

IC40—DPU2500
IC60—CCU2000
IC73-MDA2061

The integrated circuits identified above are described further in ITT literature entitled "DIGIT 2000 VLSI Digital TV System".

Accordingly, from the above description it can be seen that, in the above-described digital television receiver, the data supplied to the interface units 29, 39 and 49 are latched into registers contained in the respective interface units and retained therein until new data arrives. Thus, the amplifiers 25R, 25G, 25B, the luminance processing circuit 33, the chrominance processing circuit 35 and the pulse shapers 42, 44 all are controlled in accordance with the data latched in the registers contained within the respective interface units 29, 39, 49. These interface units and this data are susceptible to becoming compromised. More specifically, because there are numerous different kinds of voltages and pulses present within a television receiver, such as the high voltage pulses applied to the colour cathode ray tube (picture tube) 13, there is a real possibility that the data that is latched in the registers in the interface units will be either totally rewritten incorrectly or be affected so as to be incorrect by these high voltages and noise pulses. An embodiment of the present invention that now will be described is designed to prevent this eventuality or at least to reduce the likelihood of its occurring.

Figure 2 shows a digital television receiver which is substantially identical to that described with referene to Figure 1, except for the provision of a vertical blanking pulse signal VBLK from the unit 40, which is a digital deflection unit. More specifically, the vertical blanking pulse signal VBLK is obtained from the vertical pulse shaper 44 that is driven by the integrated signal from the vertical sync separator 41. The vertical blanking pulse signal VBLK is fed back to the microcomputer 60, which employs a conventional read only memory (not shown) that has stored therein a routine or operating method to accomplish the purpose mentioned above. This method is depicted in a flow chart shown in Figure 3.

From Figure 3, it can be seen that when the power switch (not shown) of the television receiver of Figure 2, for example, is turned on, method steps 80 are initialised and a first step 81 operates so that the data stored in the memories 72 and 73 is supplied to the respective appropriate portions, for example, through the microcomputers 50 and 60, as described hereinabove, whereby the television receiver then is set to the state at which it was prior to the time that the power switch was turned off. The routine then goes to a step 82 at which a relationship N=0 is established. In this example, the variable N represents the number of registers that are available for use, such registers being those in the interface units 29, 39 and 49. As an example, the total number of such registers may be approximately 20 and, thus, the relationship and $0 \leqslant N \leqslant 19$ is established.

Once the variable N, namely the number of available registers, is set to zero, the routine goes to a step 83 at which it is determined whether a key input signal from the key panel or keyboard 71 is present. If no key input is then present the routine moves to a step 84 at which it is determined whether the period of time in which the routine is operating is a vertical blanking period. This is determined by use of the vertical blanking pulse signal VBLK fed back from the vertical pulse shaper 44 to the microcomputer 60. If the period of time in which the routine is operating is not a vertical blanking period, the method reverts to the step 84 and this check is repeated until the next vertical blanking period arrives.

Once the time of the step 84 coincides with a vertical blanking period, as determined by the signal VBLK, a step 85 is performed. In the step 85, the data for the $N^{th}$ register is derived from the memory 73 and such data then is supplied to the $N^{th}$ register. At the time data is stored in the memory 72, the corresponding data is stored temporarily in the registers of the interface unit 74 by means of the microcomputer 50 and then is supplied from the interface unit 74 to the corresponding register in the television receiver during the vertical blanking period. Accordingly, the step 85 operates to refresh the $N^{th}$ register during the vertical blanking period. This is a significant point, because it indicates that the information in at least one of the registers is refreshed or revived, or at least checked, during a vertical blanking period and, thus, by stepping through all of the various registers, all of the data stored therein ultimately is refreshed.

In any event, and subsequent to the step 85, the routine moves to a step 86 at which the register variable N is incremented by "1", and the routine then moves to a step 87 to determine whether the value of the variable N is up to its maximum, which corresponds to the total possible number of registers. If the value of the number or variable N is greater than the total number of registers, and in this example the total number of registers is 20 so the value of N cannot exceed 19, the routine moves to a step 88 at which N is reset to zero and the method performs a step 100. In the event that N is not yet up to the maximum value, that is, is not greater than 19, then the next step is the step 100, the step 88 being bypassed. During the step 100, the appropriate signal processing, such as automatic white balance and the like, is carried out by the issuance of an appropriate command, and once such appropriate command has been issued the entire routine reverts back to the step 83 and each method step is performed again. Accordingly, if in the step 83 there is no key signal from the key panel 71, it will be seen that the registers of the interface units 29, 39 and 49 are refreshed repeatedly in turn at each successive vertical blanking period. In this specific embodiment, the reason for refreshing only one register at a time is that in the practical operating system such data refreshing operation takes a relatively long time and, to be on the safe side, it is best to refresh only a single register during one vertical blanking period. Accordingly, it will be seen that, assuming that there is a total of 20 registers, it will require only 20 vertical field periods to refresh all of the registers in this digital television receiver.

In a situation when the user operates one of the keys of the keyboard 71, thereby causing a key signal to be present, the routine moves from the step 83 to a step 91, at which step the data Di that corresponds to the specific key that has been manipulated is formed. The routine then moves to a step 92. In the step 92, the number of the register Ni into which the data Di should be written is set at the variable N, that is N=Ni. Once such register value is set, the time period is checked in the step 93 to determine whether it corresponds in time to a vertical blanking period. If a vertical blanking period is present, as determined by the vertical blanking pulse signal VBLK, then the data Di is supplied to the register selected as the number Ni and is written therein in a step 94. Thus, at this point the television receiver is placed in the appropriate receiving state that was designated by the key actuated at the step 83. Once the key signal data is supplied to the appropriate register, the routine moves to a step 95 at which the data actually is written into the corresponding address of the memory 72 and, after such writing operation has taken place, the routine moves back to the step 86. In regard to the step 93, if a vertical blanking period is not present, that step is repeated until a vertical blanking pulse VBLK is present and the routine then proceeds.

Thus, as described hereinabove, the data stored in the registers of the respective interface units 29, 39, and 49 is refreshed sequentially at every vertical blanking period so that, even if data stored in a register is rewritten or corrupted by noise present in the receiver, the corrupted data can be corrected almost immediately, thereby precluding (or at least greatly reducing the possibility of) resultant trouble in the receiver caused by such erroneous data. Moreover, because a register is refreshed only during a vertical blanking period the actual displacement of the picture on the cathode ray tube screen will not change in the midst of a picture display. That is, there will be no change half-way through a picture since any changes occurring during a vertical blanking interval will be essentially undetectable by the viewer.

Additionally, although the register normally are refreshed sequentially in a predetermined order, when the user operates a button on the keyboard 71, the new data is then written in a dominant fashion in the corresponding register, regardless of the place in the sequential order then in force for refreshing that register. The result of this is that the television receiver responds quite quickly to the actuation of the keyboard and provides the user with convenience in using the receiver. In other words, if the writing of the new data into the corresponding register is not performed until the corresponding register is refreshed, even in the worse case, the television receiver cannot respond to the key input until the elapse of 20 field periods, which corresponds to a little over 0.3 seconds. Nevertheless, according to the present arrangement even this very small delay is not present, in that the television receiver responds immediately to a key input, thereby giving the user a better feel of control over the system.

**Claims**

1. Apparatus for use with a television receiver in which a television signal is processed in digital form, the apparatus comprising:

processing control means (60) for controlling the digital processing of the television signal;

memory means (29, 39, 49, 72, 73) connected to the processing control means (60) for storing data used thereby in controlling the processing;

refreshing means (60) connected to the memory means (29, 39, 49, 72, 73) for refreshing data stored therein;

keyboard means (71) operably connected to the receiver and capable of being actuated by a user of the television receiver for inputting data to control operation of the television receiver; and

write control means (50) connected to the keyboard means (71) and the memory means (29, 39, 49, 72, 73) for controlling the memory means for writing input data into the memory means upon actuation of the keyboard means;

characterised in that the refreshing means (60) is responsive to a vertical blanking pulse signal generated within the apparatus from the television signal to refresh said data stored in the memory means (29, 39, 49, 72, 73) at regular periodic intervals which correspond to the vertical synchronising period of the television signal.

2. Apparatus according to claim 1, in which the refreshing means (60) is operative to refresh said data in the memory means (29, 39, 49, 72, 73) during vertical blanking periods of the television signal.

3. Apparatus according to claim 1 or claim 2, in which the memory means (29, 39, 49, 72, 73) includes a non-volatile re-writable memory (72, 73) and a plurality of interface registers (29, 39, 49).

4. A method for use with a television receiver for digitally processing a television signal that is converted into a digital signal and controlled by digital data stored in a memory (29, 39, 49, 72, 73) and having a keyboard (71) for inputting new data upon actuation by the user of the television receiver, the method being characterised by the steps of:

generating a vertical blanking pulse signal from the television signal;

in response to said vertical blanking pulse signal, cyclically refreshing the data stored in the memory (29, 39, 49, 72, 73) at regular periodic intervals which correspond to the vertical synchronising period of the television signal; and

writing new data inputted by the user into the memory (29, 39, 49, 72, 73) at any time during a refreshing cycle upon inputting new data by the user.

5. A method according to claim 4, including performing the step of cyclically refreshing the data only during vertical blanking periods of the television signal.

6. A method according to claim 4 or claim 5, in which there are a number of locations in the memory for storing data and in which the step of refreshing includes sequentially refreshing the data at each location, one location at a time.

7. Apparatus for use with a television receiver in which a television signal is digitally processed, the apparatus comprising:

processing control means (60) for controlling digital processing of the television signal in accordance with digital data inputted thereto;

register means (29, 39, 49) connected to the processing control means (60) for temporarily storing said digital data used by the processing control means for controlling processing of said television signal;

refreshing means (60) connected to the register means (29, 39, 49) for refreshing digital data stored therein from a memory means (72, 73);

keyboard means (71) operably connected to the receiver and capable of being actuated manually by a user of the television receiver for inputting data to control operation of the television receiver; and

write control means (50) for controlling the memory means (72, 73) for writing input data into the memory means upon actuation of the keyboard means;

characterised in that the refreshing means (60) is responsive to a vertical blanking pulse signal generated within the apparatus from the television signal to refresh said data stored in the register means (29, 39, 49) at regular periodic intervals which correspond to the vertical synchronising period of the television signal.

8. Apparatus according to claim 7, in which the refreshing means (60) is operative to refresh said data only during vertical blanking periods of the television signal.

9. Apparatus according to claim 7 or claim 8, in which the memory means (72, 73) includes at least one non-volatile, re-writable memory (72, 73) and the register means forms part of an interface unit (29, 39, 49) between the memory means (72, 73) and the process control means (60).

**Patentansprüche**

1. Gerät zur Verwendung mit einem Fernsehempfänger, in dem ein Fernsehsignal in digitaler Form verarbeitet wird,

mit einer Prozessorsteuereinrichtung (60) zur Steuerung der digitalen Verarbeitung des Fernsehsignals,

mit einer mit der Prozessorsteuereinrichtung (60) verbundenen Speichereinrichtung (29, 39, 49, 72, 73) zur Speicherung von Daten, die zur Steuerung der Signalverarbeitung verwendet werden,

mit einer mit der Speichereinrichtung (29, 39, 49, 72, 73) verbundenen Auffrischeinrichtung (60) zum Auffrischen der in der Speichereinrichtung gespeicherten Daten,

mit einer wirkungsmäßig mit dem Empfänger verbundenen Tastaturanordnung (71), die von dem Benutzer des Fernsehempfängers zur Eingabe von Daten für die Betriebssteuerung des Fernsehempfängers betätigbar ist,

sowie mit einer mit der Tastaturanordnung (71) und der Speichereinrichtung (29, 39, 49, 72, 73) verbundenen Schreibsteuereinrichtung (59) für die Steuerung der Speichereinrichtung bei dem Einschreiben von Eingabedaten in die Speichereinrichtung bei der Betätigung der Tastaturanordnung,

dadurch gekennzeichnet, daß die Auffrischeinrichtung (60) auf ein vertikales Austastimpulssignal anspricht, das in dem Gerät aus dem Fernsehsignal erzeugt wird, um die in der Speichereinrichtung (29, 39, 49, 72, 73) gespeicherten Daten in regelmäßigen periodischen Intervallen aufzufrischen, die der vertikalen Synchronisierperiode des Fernsehsignals entsprechen.

2. Gerät nach Anspruch 1, bei dem die Auffrischeinrichtung (60) bewirkt, daß die Daten in der Speichereinrichtung (29, 39, 49, 72, 73) während der vertikalen Austastperioden des Fernsehsignals aufgefrischt werden.

3. Gerät nach Anspruch 1 oder 2, bei dem die Speichereinrichtung (29, 39, 49, 72, 73) einen nichtflüchtigen wiederbeschreibbaren Speicher (72, 73) sowie mehrere Interface-Register (29, 39, 49) enthält.

4. Verfahren zur Verwendung mit einem Fernsehempfänger zur digitalen Verarbeitung eines in ein Digitsignal umgewandelten Fernsehsignals, wobei der Fernsehempfänger durch in einem Speicher (29, 39, 49, 72, 73) gespeicherte digitale Daten gesteuert wird und eine Tastatur (71) besitzt, die bei Betätigung durch den Benutzer des Fernsehempfängers neue Daten eingibt,

gekennzeichnet durch folgende Verfahrensschritte:

Erzeugen eines vertikalen Austastimpulssignals aus dem Fernsehsignal,

zyklisches Auffrischen der in dem Speicher (29, 39, 49, 72, 73) gespeicherten Daten in regelmäßigen periodischen Intervallen, die der vertikalen Synchronisierperiode des Fernsehsignals entsprechen, in Abhängigkeit von dem vertikalen Austastimpulssignal,

Einschreiben von durch den Benutzer eingegebenen neuen Daten in den Speicher (29, 39, 49, 72, 73) zu beliebiger Zeit während eines Auffrischzyklus bei der Eingabe von neuen Daten durch den Benutzer.

5. Verfahren nach Anspruch 4, bei dem der Verfahrensschritt des zyklischen Auffrischens der Daten nur während vertikaler Austastperioden des Fernsehsignals durchgeführt wird.

6. Verfahren nach Anspruch 4 oder 5, bei dem in dem Speicher eine Anzahl von Speicherplätzen zur Speicherung von Daten vorhanden ist und bei dem der Verfahrensschritt des Auffrischens der Daten das sequentielle Auffrischen der Daten an jedem der Speicherplätze beinhaltet, wobei in einem gegebenen Zeitpunkt die Daten an nur einem Speicherplatz aufgefrischt werden.

7. Gerät zur Verwendung mit einem Fernsehempfänger, in dem ein Fernsehsignal digital verarbeitet wird,

mit einer Prozessorsteuereinrichtung (60) zur Steuerung der digitalen Verarbeitung des Fernsehsignals nach Maßgabe von in die Prozessorsteuereinrichtung eingegebenen digitalen Daten,

mit mit der Prozessorsteuereinrichtung (60) verbundenen Registern (29, 39, 49) zur temporären Speicherung der genannten digitalen Daten, die von der Prozessorsteuereinrichtung zur Verarbeitungssteuerung des Fernsehsignals verwendet werden,

mit einer mit den Registern (29, 39, 49) verbundenen Auffrischeinrichtung (60) zum Auffrischen von digitalen Daten, die von einer Speichereinrichtung (72, 73) dort eingespeichert werden,

mit einer wirkungsmäßig mit dem Empfänger verbundenen Tastaturanordnung (71), die von dem Benutzer des Fernsehempfängers zur Eingabe von Daten zur Steuerung des Betriebs des Fernsehempfängers manuell betätigbar ist,

sowie mit einer Einschreibsteuereinrichtung (50) für die Steuerung der Speichereinrichtung (72, 73) beim Einschreiben von Daten in die Speichereinrichtung bei der Betätigung der Tastaturanordnung,

dadurch gekennzeichnet, daß die Auffrischeinrichtung (60) auf ein vertikales Austastimpulssignal anspricht, das in dem Gerät aus dem Fernsehsignal erzeugt wird, um die in den Registern (29, 39, 49) gespeicherten Daten in regelmäßigen periodischen Intervallen aufzufrischen, die der vertikalen Synchronisierperiode des Fernsehsignals entsprechen.

8. Gerät nach Anspruch 7, bei dem die Auffrischeinrichtung (60) bewirkt, daß die Daten nur während der vertikalen Austastperioden des Fernsehsignals aufgefrischt werden.

9. Gerät nach Anspruch 7 oder 8, bei dem die Speichereinrichtung (72, 73) wenigstens einen nichtflüchtigen wiederbeschreibbaren Speicher (72, 73) umfaßt und die Register Bestandteil einer zwischen der Speichereinrichtung (72, 73) und der Pozessorsteuereinrichtung (60) angeordneten Interface-Einheit (29, 39, 49) sind.

**Revendications**

1. Dispositif prévu pour l'utilisation avec un récepteur de télévision dans lequel un signal de télévision est traité sous forme numérique, le dispositif comprenant:

des moyens de commande de traitement (60) destinés à commander le traitement numérique du signal de télévision;

des moyens de mémoire (29, 39, 49, 72, 73) connectés aux moyens de commande de traitement (60), pour enregistrer des données qui sont utilisées par ces derniers dans la commande du traitement;

des moyens de régénération (60) qui sont connectés aux moyens de mémoire (29, 39, 49, 72, 73) pour régénérer des données enregistrées dans ces derniers;

un clavier (71) qui est connecté fonctionnellement au récepteur et peut être actionné par un utilisateur du récepteur de télévision, pour introduire des données pour commander le fonctionnement du récepteur de télévision; et

des moyens de commande d'écriture (50) qui sont connectés au clavier (71) et aux moyens de mémoire (29, 39, 49, 72, 73) pour commander les moyens de mémoire pour l'écriture de données d'entrée dans les moyens de mémoire, au moment de l'actionnement du clavier;

caractérisé en ce que les moyens de régénération (60) réagissent à un signal d'impulsion d'effacement vertical qui est produit dans le dispositif à partir du signal de télévision, en régénérant les données qui sont enregistrées dans les moyens de mémoire (29, 39, 49, 72, 73), à des intervalles périodiques réguliers qui correspondent à la période de synchronisation verticale du signal de télévision.

2. Dispositif selon la revendication 1, dans lequel les moyens de régénération (60) régénèrent les données dans les moyens de mémoire (29, 39, 49, 72, 73) pendant des périodes d'effacement vertical du signal de télévision.

3. Dispositif selon la revendication 1 ou la revendication 2, dans lequel les moyens de mémoire (29, 39, 49, 72, 73) comprennent une mémoire non volatile avec possibilité de réécriture (72, 73), et un ensemble de registres d'interface (29, 39, 49).

4. Un procédé prévu pour l'utilisation avec un récepteur de télévision destiné à traiter de façon numérique un signal de télévision qui est converti en un signal numérique, et est commandé par des données numériques qui sont enregistrées dans une mémoire (29, 39, 49, 72, 73), le récepteur comportant un clavier (71) pour introduire de nouvelles données lorsqu'il est actionné par l'utilisateur du récepteur de télévision, le procédé étant caractérisé par les étapes suivantes:

on produit un signal d'impulsion d'effacement vertical à partir du signal de télévision;

sous l'effet de ce signal d'impulsion d'effacement vertical, on régénère de façon cyclique les données qui sont enregistrées dans la mémoire (29, 39, 49, 72, 73), à des intervalles périodiques réguliers qui correspondent à la période de synchronisation verticale du signal de télévision; et

on écrit dans la mémoire (29, 39, 49, 72, 73) de nouvelles données introduites par l'utilisateur, à tout moment pendant un cycle de régénération, lorsque l'utilisateur introduit de nouvelles données.

5. Un procédé selon la revendication 4, dans lequel on accomplit l'étape consistant à régénérer les données de façon cyclique seulement pendant des périodes d'effacement vertical du signal de télévision.

6. Un procédé selon la revendication 4 ou la revendication 5, dans lequel il existe dans la mémoire un certain nombre d'emplacements pour l'enregistrement de données, et dans lequel l'étape de régénération comprend la régénération séquentielle des données à chaque emplacement, un emplacement à la fois.

7. Dispositif prévu pour l'utilisation avec un récepteur de télévision dans lequel un signal de télévision est traité de façon numérique, le dispositif comprenant.

des moyens de commande de traitement (60) destinés à commander le traitement numérique du signal de télévision conformément à des données numériques qui leur sont appliqués;

un ensemble de registres (29, 39, 49) connectés aux moyens de commande de traitement (60), pour enregistrer temporairement les données numériques que les moyens de commande de traitement utilisent pour commander le traitement du signal de télévision;

des moyens de régénération (60) connectés à l'ensemble de registres (29, 39, 49) pour régénérer des données numériques qui sont enregistrées dans ces derniers, à partir de moyens de mémoire (72, 73);

un clavier (71) connecté fonctionnellement au récepteur et qui peut être actionné manuellement par un utilisateur du récepteur de télévision pour introduire des données pour commander le fonctionnement du récepteur de télévision; et

des moyens de commande d'écriture (50) pour commander les moyens de mémoire (72, 73), pour écrire des données d'entrée dans les moyens de mémoire sous l'effet de l'actionnement du clavier;

caractérisé en ce que les moyens de régénération (60) réagissent à un signal d'impulsion d'effacement vertical qui est produit à l'intérieur du dispositif, à partir du signal de télévision, en régénérant les données qui sont enregistrées dans l'ensemble de registres (29, 39, 49), à des intervalles périodiques réguliers qui correspondent à la période de synchronisation verticale du signal de télévision.

8. Dispositif selon la revendication 7, dans lequel les moyens de régénération (60) ne régénèrent les données que pendant des périodes d'effacement vertical du signal de télévision.

9. Dispositif selon la revendication 7 ou la revendication 8, dans lequel les moyens de mémoire (72, 73) comprennent au moins une mémoire non volatile avec possibilité de réécriture (72, 73), et l'ensemble de registres fait partie d'une unité d'interface (29, 39, 49) entre les moyens de mémoire (72, 73) et les moyens de commande de traitement (60).

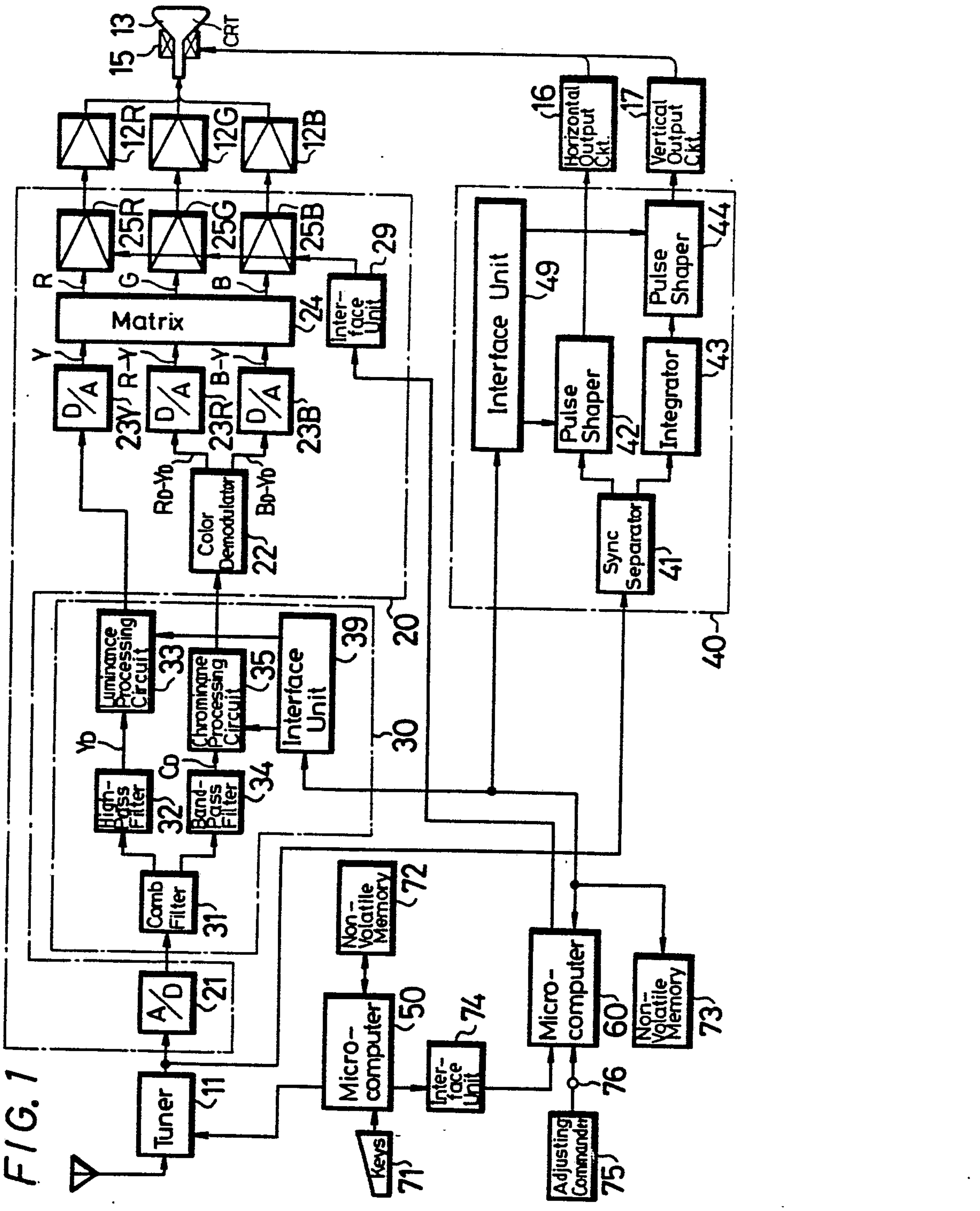
CRT
Tuner
A/D
Comb Filter
High-Pass Filter
Band-Pass Filter
Luminance Processing Circuit
Chrominance Processing Circuit
Interface Unit
Color Demodulator
D/A
Matrix
Inter-face Unit
Horizontal Output Ckt.
Vertical Output Ckt.
Interface Unit
Pulse Shaper
Pulse Shaper
Integrator
Sync Separator
Non-Volatile Memory
Micro-computer
Inter-face Unit
Keys
Micro-computer
Non-Volatile Memory
Adjusting Commander
Y
R-Y
B-Y
R
G
B
YD
CD
RD-YD
BD-YD

FIG. 1

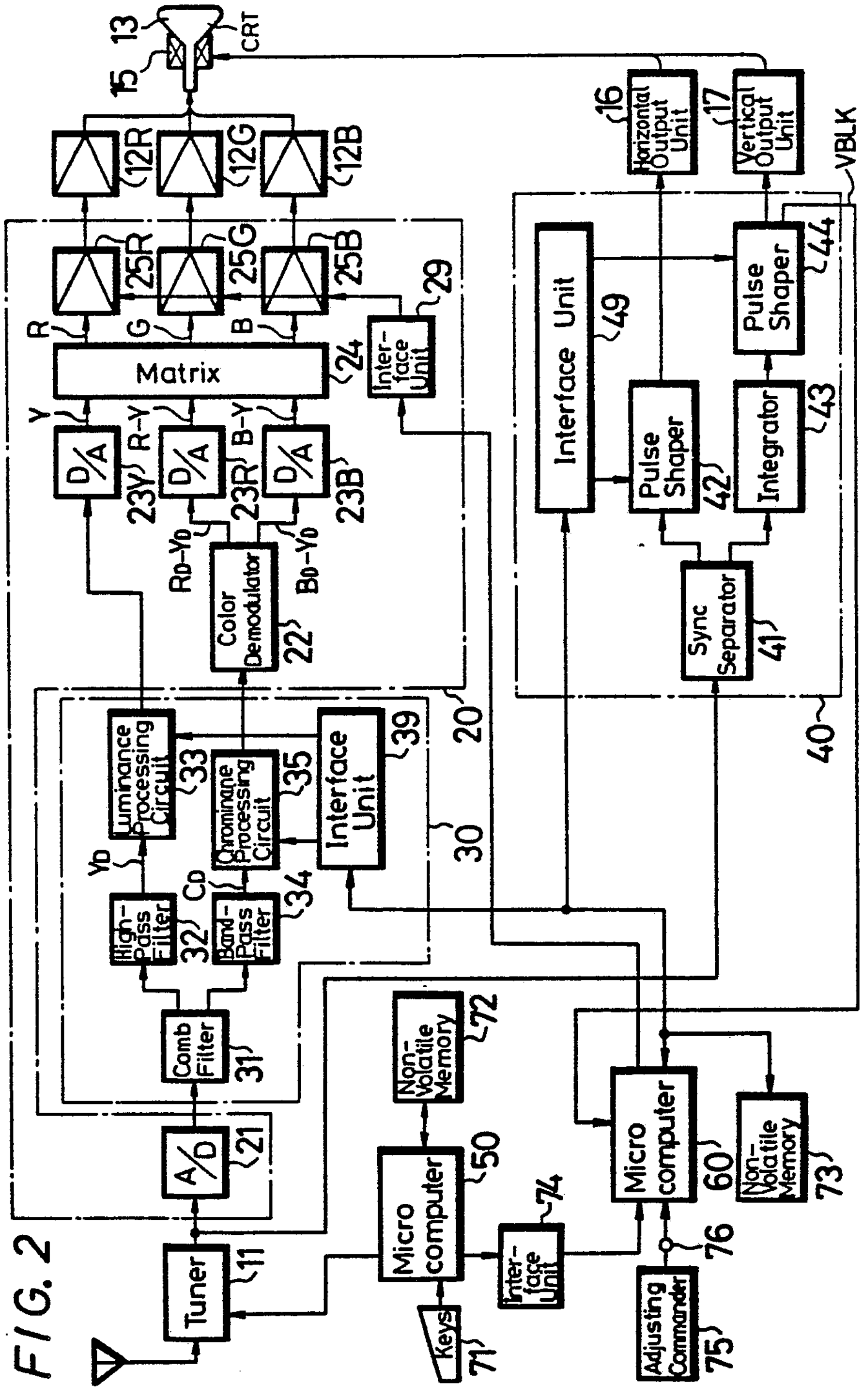
Tuner
A/D
Comb Filter
High-Pass Filter
Band-Pass Filter
Luminance Processing Circuit
Chrominance Processing Circuit
Interface Unit
Color Demodulator
D/A
Matrix
Inter-face Unit
CRT
Horizontal Output Unit
Vertical Output Unit
VBLK
Interface Unit
Pulse Shaper
Integrator
Sync Separator
Micro computer
Non-Volatile Memory
Keys
Adjusting Commander

FIG. 2

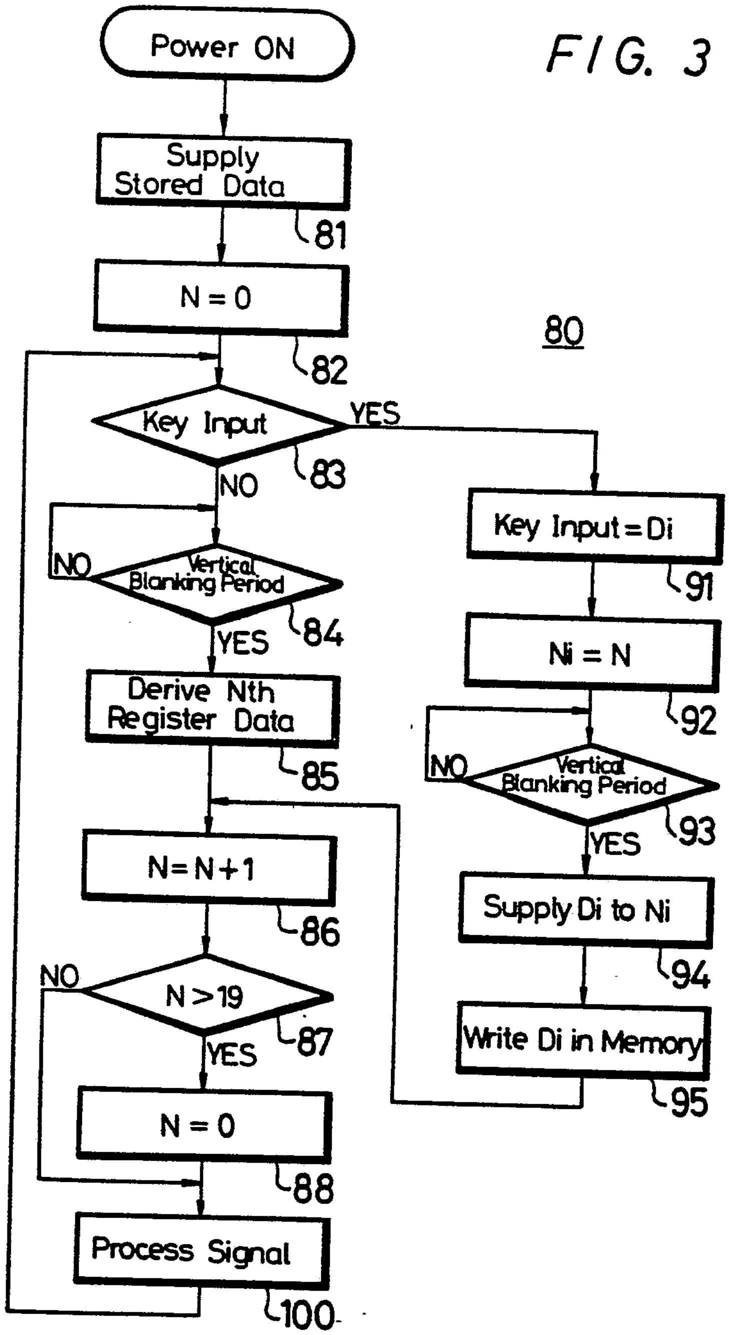
Power ON
Supply Stored Data
81
N = 0
82
Key Input
YES
83
NO
NO
Vertical Blanking Period
84
YES
Derive Nth Register Data
85
N=N+1
86
NO
N>19
87
YES
N = 0
88
Process Signal
100
Key Input=Di
91
Ni = N
92
NO
Vertical Blanking Period
93
YES
Supply Di to Ni
94
Write Di in Memory
95
80

FIG. 3